Europäisches Patentamt

European Patent Office

Office européen des brevets

(19)

(11) Publication number: **0 325 678**
**A1**

(12) **EUROPEAN PATENT APPLICATION**

(21) Application number: **88102698.3**

(22) Date of filing: **24.02.88**

(51) Int. Cl.4: **A47J 31/54**

---

The title of the invention has been amended (Guidelines for Examination in the EPO, A-III, 7.3).

(30) Priority: **25.01.88 IT 1919988**

(43) Date of publication of application:
**02.08.89 Bulletin 89/31**

(84) Designated Contracting States:
**AT BE CH DE ES FR GB GR LI LU NL SE**

(71) Applicant: **BREVETTI GAGGIA S.p.A.**

**I-20087 Robecco sul Naviglio(IT)**

(72) Inventor: **De Felip, Aldo**
**Via Tadino 60**
**Milan(IT)**

(74) Representative: **Klausner, Erich et al**
**c/o Ufficio Internazionale Brevetti Ing. C.**
**Gregorj S.p.A. Via Dogana 1**
**I-20123 Milano(IT)**

---

(54) **Hot water generator comprising a plurality of series-connected modular boilers for espresso coffee machines.**

(57) A hot water generator consisting of at least two series-connected modular boiler elements (1, 1a...1n) in which the thermal head or shock required to raise the water temperature up to the desired value for the production of espresso coffee and various hot drinks, with or without foam in a single conventional boiler is subdivided among various smaller sized boilers of equal lesser capacity, the heating element (4) of which is set so as to obtain more or less identical thermal heads between one small boiler and the successive one up to the achievement of the desired temperature, thus reducing the formation of unwanted calcareous deposits.

EP 0 325 678 A1

# HOT WATER GENERATOR CONSISTING OF AT LEAST TWO MODULAR BOILER ELEMENTS CONNECTED IN SERIES TO LIMIT THE FORMATION OF CALCAREOUS DEPOSITS IN MACHINES FOR MAKING ESPRESSO COFFEE AND HOT DRINKS, WITH OR WITHOUT FORMATION OF FOAM

This invention relates to a hot water generator consisting of at least two modular boiler elements connected in series to limit the formation of calcareous deposits in machines for the production of espresso coffee and hot drinks, with or without foam. In espresso coffee machines and in machines for making hot drinks, such as cappuccino, tea, camomille, punches and the like, there is provided a single boiler to supply the water both for the production of espresso coffee and other hot drinks, or a boiler for the production of steam and a boiler for the production of espresso coffee, or, again various combinations of these boilers together with heat recovery units of auxiliary heating systems apt to bring the water to be used to the desired temperature. However, in all these boilers the heating of the water from the temperature of the water distributed by the hydraulic network to that required for each drink takes place in a single step as a result of which the thermal shock from an average temperature of $15°C$ up to an average temperature of $90°C$ or more is strong, with consequent production of strong calcareous deposits.

One of the objects of this invention is to reduce such calcareous deposits by limiting the thermal head and stepping the heating of the water from the temperature of the water distributed by the hydraulic network to the temperature desired in a plurality of steps, with consequent reduction of the calcareous deposits. A further object of the present invention is to reduce the number of types of boilers to be utilized both for the production of espresso coffee and for the production of steam and hot water to be utilized for various hot drinks, which types of boilers depend upon the volumes of water to be supplied per hour and upon the water heating temperature to be reached.

This invention allow to use a single type of boiler with a single volumetric capacity, meeting the demands of various capacities by interconnecting small boilers of a single type in series, up to the achievement of the desired capacity. This system makes it possible to keep in a stockhouse only one type of boiler, with high economic savings since it is no longer necessary to produce boilers of different capacities to meet tailored requirements of customers.

According to this invention, it is indeed possible to meet the various capacity requirements by using boilers of a single type by simply interconnecting in series a plurality of boilers which for this reason are defined as modular, up to the achievement of the total capacity required. Of course, these boilers can be utilized for the production of hot water for espresso coffee as well as for other hot drinks, and for production of steam.

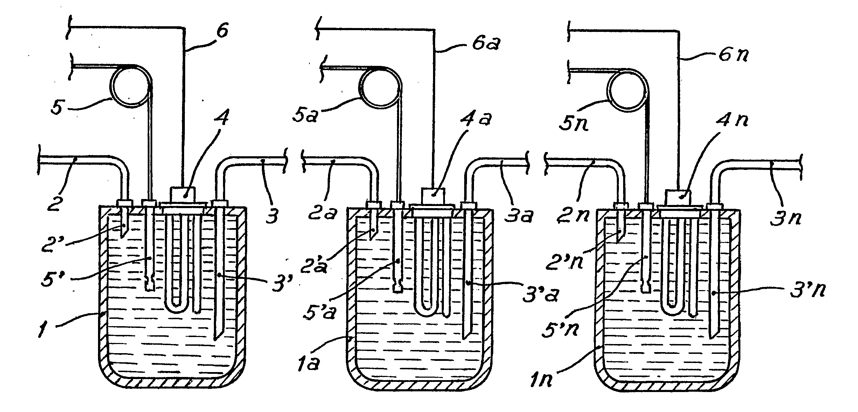

The sole figure of the attached drawing shows a set of identical small boilers connected in series,designated , from left to right, as 1,1a....1n. The feedwater is supplied to the first small boiler from the hydraulic network, either directly or through an interposed pump, along duct 2 terminating in small boiler 1 with a dipper 2'. In this small boiler the water is heated by an armored resistor 4, powered through an electric line 6 up to a desired temperature set by thermostat 5, the sensing probe 5' of which is inserted in the small boiler. This heating temperature of the water is not the final temperature of the water, but a temperature much lower, depending upon the number of small boilers to be arranged in series, the final temperature being reached only in the last small boiler of the series. Therefore if, for example, three small boilers in series are contemplated, the water temperature in the first small boiler 1 could be set, for example, at about $40°C$, and, as a result of this the thermal head will be about $25°C$, assuming a temperature of $15°C$ of the water in the hydraulic network.

After having reached, for example $40°C$, the water can flow out of the first small boiler 1 through dipper 3' and along duct 3 to be introduced through duct 2a and dipper 2'a, into the second small boiler 1a. In this small boiler 1a the water will be heated, for example, up to $65°C$ by armored resistor 4a powered via electric line 6a, said electric power supply being interrupted when probe 5'a of thermostat 5a senses that the temperature desired has been reached. From small boiler 1a the water along flows into the next small boiler through dipper 3'a and along duct 3a, and reaches the next small boiler, which may be last boiler 1n, flowing through ducts 2n and dipper 2'n immersed in boiler 1n. Here the water will reach the desired final temperature, for example, $85-90°C$ due the heating produced by armored resistor 4n powered via electric line 6n. The water from small boiler 1n will be withdrawn through dipper 3n and duct 3n that will supply the water to the final user device. Said final user device (not shown) may be a conventional espresso coffee dispensing assembly consisting of a filter holder and filter or a dispensing nozzle for very hot water to produce various drinks or, again,if final small boiler 1n is a boiler to produce hot water and steam, to a steam dispensing nozzle. The subdivision of the thermal head between the feed temperature of the water supplied from the hydraulic network and the final temperature into a plurality of steps makes possible a very substantial reduction of calcareous deposits in the hydraulic systems of the various small boilers, in the small boilers themselves and on the armored resistors and on all other elements immersed in the hot water in that a part of the calcareous material which forms in the heating stage will not adhere to the metal surfaces, but it is held in suspension in the water fed to the various user devices and eliminated together with said water.

Moreover, if a hot water quantity Q per hours is required, it is not necessary to provide a boiler having a capacity Q per hour but only small boilers with a capacity Q/n per hour, where "n" is the member of small boilers contemplated. It is therefore possible to keep in stock small boilers having a given fixed capacity and to arrange several of said small boilers in series in order to achieve the desired final capacity.

It is therefore evident that a considerable saving in production cost of small boilers as well as storage costs is made possible as it is not necessary to keep in stock various boilers of different capacities to meet different requirements of customers.

## Claims

1) Hot water and/or steam generator for machines for production of espresso coffee and various other hot drinks such as tea, cappuccini and similar drinks, characterized by the interconnection in series of a least two modular small boilers of a single type, each modular small boiler comprising means to feed the water, heating means for the water, thermostatic means to control the water and/or steam temperature, and means to take up the hot water and/or steam.

2) Generator according to claim 1, characterized in that the first small boiler is fed from the hydraulic network directly or by the interposition of a conventional pump, and the water outlet duct of the first small boiler is connected to the feed duct of the next small boiler, the outlet duct of said next small boiler, if this is not the last one, being connected to the inlet duct of a possible successive boiler, and so on, the outlet duct of the last small boiler being connected to the devices using the hot water or steam, said utilization devices being the conventional espresso coffee dispensing assemblies or the conventional hot water dispensing nozzles, or the conventional steam dispensing nozzles.

3) Generator according to claims 1 and 2, characterized in that the thermostatic means are set so as to subdivide the thermal head of the water, between the feed temperature of the cold water from an hydraulic network and the desired final temperature of the water fed to the hot water and/or steam user devices, between the plurality of small boilers which are connected in series so that the thermal head in the various small boilers is more or less of equal value.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | US-A-4158330 (CORY FOOD SERVICES INC.) <br> * the whole document * | 1, 2 | A47J31/54 |
| Y | | 3 | |
| | --- | | |
| X | FR-A-2422371 (CORY FOOD SERVICES INC.) <br> * page 2, line 33 - page 3, line 36; figures 1-4 * | 1, 2 | |
| Y | | 3 | |
| | --- | | |
| X | US-A-2680802 (BREMER ET AL) <br> * the whole document * | 1, 2 | |
| | --- | | |
| A | FR-A-993459 (DREYFUS ET AL) <br> * the whole document * | 1 | |
| | ----- | | TECHNICAL FIELDS SEARCHED (Int. Cl.4 ) |
| | | | A47J |

The present search report has been drawn up for all claims

| Place of search | Date of completion of the search | Examiner |
|---|---|---|
| THE HAGUE | 17 APRIL 1989 | MEINDERS H. |